# EUROPEAN PATENT APPLICATION

(11) **EP 4 796 779 A1**
(43) Date of publication of application: **26.08.2026**
(21) Application number: 25159613.6
(22) Date of filing: 24.02.2025
(51) Int. Cl.: F02M 26/70, F16K 1/22, F16K 15/03, F16K 1/16

(54) **EGR VALVE FOR AN INTERNAL COMBUSTION ENGINE**

(71) Applicant: Volvo Truck Corporation, 405 08 Göteborg (SE)
(72) Inventor: BERNHARDSSON, M. Daniel, 416 69 Göteborg (SE); MOHLIN, Anders, 434 35 Kungsbacka (SE)
(74) Representative: Germain Maureau

(57) **Abstract**

The invention relates to a butterfly EGR valve (20) for the regulation of the flow rate of a fluid flowing in a fluid passage (31) comprising a valve body (202) pivotable about a rotation axis (X), the valve body (202) having a first valve plate (203) and a second flexible valve plate (204) pivotally connected thereto, and urging means (205) keeping the second flexible valve plate (204) disposed at an angular distance from the first valve plate (203), the angle (α) between the plane defined by the second valve plate (204) and the plane defined by the first valve plate (203) being less than or equal to 180°, the valve body (202) being able to move at least in the successive positions:
- a fully opened position, in which the fluid flows through the fluid passage (31) without being interrupted,
- a partially closed position, in which the fluid flows through the fluid passage (31) through a reduced aperture defined by the first valve plate (203),
- a fully closed position, in which the fluid cannot flow through the fluid passage (31).

## Description

### TECHNICAL FIELD

The disclosure relates generally to an internal combustion engine system, comprising an internal combustion engine and an exhaust gas recirculation circuit. In particular aspects, the disclosure relates to an EGR valve for an internal combustion engine. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the automotive industry, it is known that an internal combustion engine is efficient when the combustion temperature in the engine cylinders is high. However, when peak temperatures remain high for a long period of time, nitrogen and oxygen in the air combine to form new compounds, primarily NO and NO2, which are referred to as "NOx". NOx emissions then depend on the combustion temperature in the engine cylinders.

With this respect, most modern engines require Exhaust Gas Recirculation (EGR) to meet NOx emissions standards. EGR consists in recirculating a portion of the exhaust gases back to the engine cylinders inlet to reduce local combustion temperatures. This arises from the fact that the residual charge (exhaust gas), which mainly includes nitrogen, carbon dioxide, oxygen and water vapor, has a specific heat that is higher to that of the fresh charge (air) and also from the fact that the O2 content at the engine intake is reduced because the proportion of fresh air is less important.

In order to introduce EGR into intake manifold, EGR pressure must be greater than intake manifold pressure. With this respect, it is known to use an Inlet Throttle Valve (ITV) to reduce the boost pressure, the pressure difference between exhaust and inlet manifolds thus being increased.

In addition, an EGR valve is provided to control the quantity of exhaust gases admitted in the intake manifold.

Under specific operating conditions, it is necessary to operate the engine with the EGR valve in a fully closed position to optimize engine performance and functionality. In an ideal scenario, a fully closed EGR valve would completely eliminate EGR flow. In practice, however, achieving zero leakage is challenging due to inherent design limitations. Any internal leakage through the EGR valve in the fully closed position can negatively impact engine performance and functionality under such conditions.

In particular, internal leakage in the EGR valve may reduce the braking power of the engine, which can compromise vehicle control and efficiency during downhill driving or deceleration. Leakage in the EGR valve may also make it challenging to achieve the precise combination of exhaust flow, temperature, and NOx levels required for the efficient regeneration of soot in the EATS system. Furthermore, during prolonged engine idling at very low temperatures, leakage may cause condensation of EGR gases, leading to ice plug formation in critical components such as the inlet throttle valve (ITV) and starter elements, potentially impairing engine reliability. Finally, when a rapid increase in engine torque is required, internal leakage in the EGR valve may reduce the power available to the turbine, leading to increased turbo lag and slower load response times.

Two major types of EGR valves are used in the current internal combustion engine systems, namely the single butterfly EGR valve type and the single poppet EGR valve type. The single poppet EGR valve type is known to exhibit lower leakage compared to the single butterfly EGR valve type. However, single poppet EGR valves come with significant drawbacks, including higher pressure drops, reduced EGR mass flow when fully open, and increased control forces. Consequently, the single butterfly EGR valve type remains a preferred design choice despite its higher susceptibility to internal leakage.

It is therefore important to reduce the internal leakage of the single butterfly EGR valve as much as possible.

The scope of this invention is to propose a single butterfly EGR valve with minimum internal leakage.

### SUMMARY

According to a first aspect of the disclosure, the disclosure relates to a butterfly EGR valve for the regulation of the flow rate of a fluid flowing in a fluid passage comprising a valve body pivotable about a rotation axis, the valve body having a first valve plate and a second flexible valve plate pivotally connected thereto, and urging means keeping the second flexible valve plate disposed at an angular distance from the first valve plate, the angle between the plane defined by the second valve plate and the plane defined by the first valve plate being less than or equal to 180°, the valve body being able to move at least in the successive positions:
- a fully opened position, in which the fluid flows through the fluid passage without being interrupted,
- a partially closed position, in which the fluid flows through the fluid passage through a reduced aperture defined by the first valve plate,
- a fully closed position, in which the fluid cannot flow through the fluid passage.

Thus configured, the disclosure makes it possible to overcome the drawbacks of the current butterfly EGR valves. In particular, the butterfly EGR valve of the disclosure permits to reduce the internal leakage when the valve is in its fully closed position by using a valve body having a flexible portion that is adapted to deform when submitted to a bending force. Thus, when the valve body entirely closes the fluid passage in the fully closed position of the valve, the flexible portion presses against an internal surface of a valve housing and deforms so as to form a quasi-sealing contact with this internal surface, thus making it possible to reduce internal leakage. The solution of the disclosure also permits to avoid the use of sealing means.

Optionally in some examples, including in at least one preferred example, the second valve plate is positioned obliquely relative to the first valve plate in the fully opened and partially closed positions of the valve body.

Optionally in some examples, including in at least one preferred example, the butterfly EGR valve further comprises a valve shaft adapted to rotatably move about the rotation axis, the first valve plate being fixedly connected to the valve shaft and the second valve plate being pivotally connected to the valve shaft.

Optionally in some examples, including in at least one preferred example, the butterfly EGR valve further comprises an actuator adapted to rotatably move the valve shaft.

Optionally in some examples, including in at least one preferred example, the butterfly EGR valve further comprises a control unit adapted to control the actuator.

Optionally in some examples, including in at least one preferred example, the urging means comprise a spring having one end connected to the first valve plate and one other end connected to the second valve plate.

Optionally in some examples, including in at least one preferred example, the urging means comprise a spring having one end connected to a valve housing within which the butterfly EGR valve is rotatably arranged and one other end connected to the second valve plate.

Optionally in some examples, including in at least one preferred example, the urging means comprise a spring having one end connected to the valve shaft and one other end connected to the second valve plate.

According to a second aspect of the disclosure, the disclosure relates to a valve arrangement for an EGR pipeline comprising a butterfly EGR valve according to any of the embodiments set forth herein above and a valve housing within which the butterfly EGR valve is rotatably arranged.

Optionally in some examples, including in at least one preferred example, the valve housing includes a rib, which delimits a fluid passage and against which abut the first valve plate in the fully closed position of the valve body and the second valve plate in the partially closed and fully closed positions of the valve body.

Optionally in some examples, including in at least one preferred example, the first valve plate is perpendicular to a plane defined by the rib in the fully opened position of the valve body, forms an angle with said plane in the partially closed position of the valve body, the angle being non null, and is aligned with said plane in the fully closed position of the valve body.

Optionally in some examples, including in at least one preferred example, the angle between the first valve plate and the plane defined by the rib is less than 30° in the partially closed position of the valve body.

According to a third aspect of the disclosure, the disclosure relates to an internal combustion engine system comprising an internal combustion engine and an exhaust gas recirculation circuit connecting an exhaust manifold of the engine to an intake manifold of the engine, the exhaust gas recirculation circuit comprising an EGR pipeline equipped with a valve arrangement according to any of the embodiments set forth herein above.

According to a fourth aspect of the disclosure, the disclosure relates to a vehicle comprising an internal combustion engine system according to any of the embodiments set forth herein above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is a side view of a heavy-duty vehicle, in particular a truck.
FIG. 2 shows a schematic representation of an internal combustion engine system according to the invention, belonging to the vehicle of **FIG. 1****.**
**FIG.** 3 is a top view of an EGR valve according to the invention.
FIG. 4 is a perspective view of a valve housing in which the EGR valve of FIG. 3 is received.
**FIG. 5a** is a sectional view taken along the line V-V in **FIG. 4****,** the EGR valve being in its fully opened position and the fluid flowing from the top of the valve housing to the bottom thereof.
**FIG. 5b** is a view similar to **FIG. 5a****,** the EGR valve being in its partially closed position.
**FIG. 5c** is a view similar to **FIG. 5a****,** the EGR valve being in its fully closed position.
**FIG. 5d** is a view similar to **FIG. 5a****,** but the fluid flowing from the bottom of the valve housing to the top thereof.

### DETAILED DESCRIPTION

The detailed description set forth below provides information and examples of the disclosed technology with sufficient detail to enable those skilled in the art to practice the disclosure.

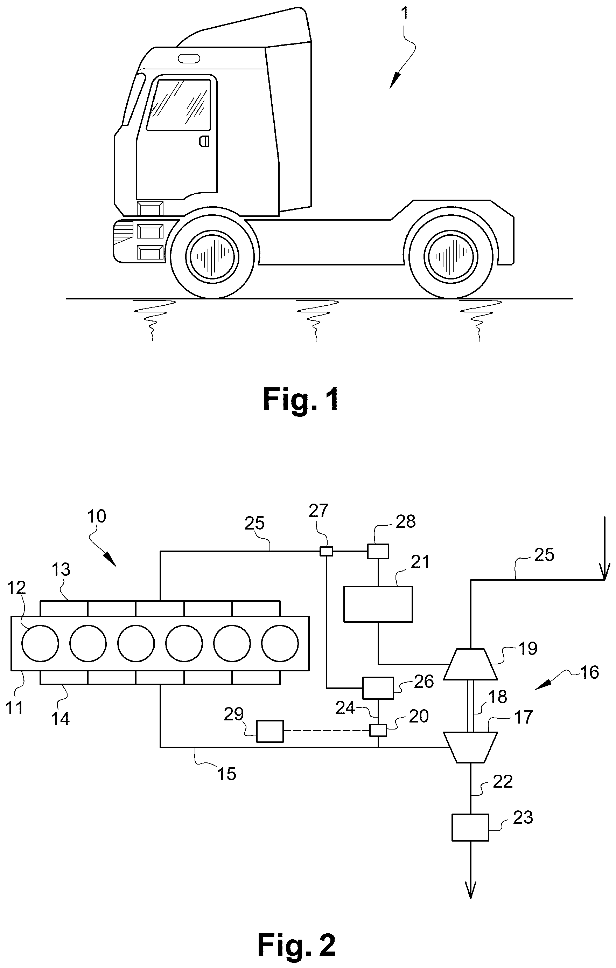

**FIG. 1** represents, in side view, a vehicle which is, in the example, a truck 1. However, in a non-represented alternative embodiment, the vehicle may be different from a truck. For instance, the vehicle may be a light, medium or heavy-duty vehicle, a utility vehicle, an autonomous vehicle, a boat, a bus or a construction vehicle.

The truck 1 includes an internal combustion engine system 10 illustrated schematically in **FIG. 2****.**

The internal combustion engine system 10 of **FIG. 2** comprises an engine block 11 having six piston cylinders 12 with an inlet manifold 13 and an exhaust manifold 14. Exhaust gases are led via an exhaust pipe 15 to the turbine rotor 17 of a turbocharger unit 16. The turbine shaft 18 drives the compressor wheel 19 of the turbocharger unit, which via an intake line 25 compresses intake air and delivers this via an intercooler 21 to the inlet manifold 13. Fuel is fed to each cylinder 12 by way of injectors (not shown).

Exhaust gases that have passed through the turbocharger unit 16 are led into the atmosphere via an exhaust line 22. The exhaust line 22 is preferably connected to an Exhaust After Treatment System (EATS) 23 for the treatment of the gases prior to release into the environment. The exhaust line Exhaust gases are also returned to the intake side of the engine as so-called EGR gas, via an EGR pipeline 24, for reduction of the engine nitrogen oxide emissions in accordance with the state of the art. This EGR pipeline 24 comprises an EGR valve 20, which serves as regulating valve for regulating the EGR flow. This EGR valve 20 will described in more detail below. In addition there is a EGR cooler 26 for cooling the EGR gases. The EGR pipeline 24 for EGR gas is connected to the intake line 25 by means of an EGR mixer 27, which also receives cooled air from the intercooler 21 via an intake throttle valve (ITV) 28.

The EGR valve 20 may advantageously be controlled by means of a control unit 29. The control unit 29 can be a separate unit or a part of another control unit used for controlling other functions of the internal combustion engine system 10.

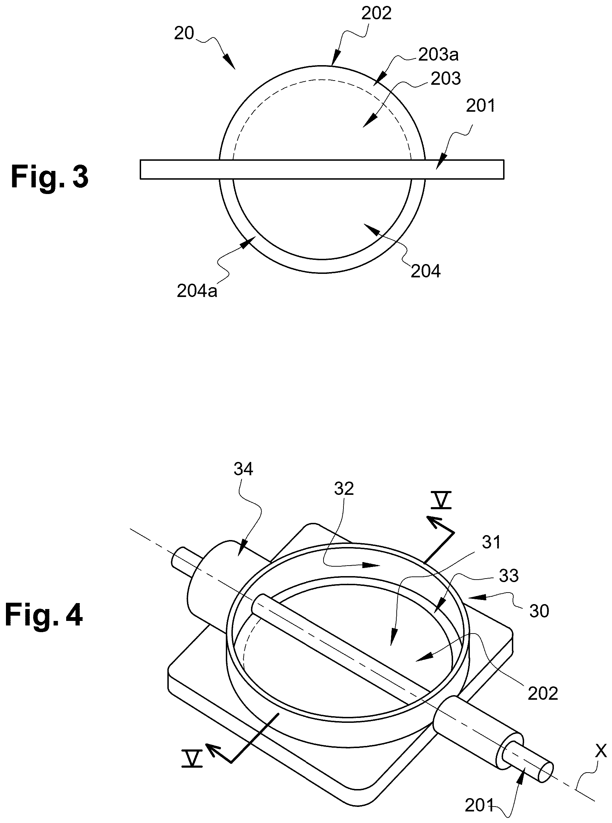

**FIG. 3** shows an exemplary embodiment of an EGR valve 20 according to the invention. This EGR valve 20 has a butterfly design and comprises a valve shaft 201 and a disc-shaped valve body 202. The valve body 202 includes a first valve plate 203 and a second valve plate 204, said first and second valve plates 203, 204 being disposed next to one another and being pivotally connected to each other such that the angle between their planes may vary. In the embodiment shown, the first valve plate 203 is fixedly connected to the valve shaft 201 and the second valve plate 204 is pivotally connected to the valve shaft 201. This pivoting connection of the second plate plate 204 may be done by any means known by a person skilled in the art. One example of a means to pivotally connect the second valve plate 204 to the valve shaft 201 is the use of a hinge mechanism, such as pin-and-slot mechanism, in which a pin fixedly connected to the valve shaft can engage with a slot in the second valve plate, allowing limited pivoting movement, or ball-and-socket joint, in which the second valve plate and the valve shaft is connected through a ball joint.

The valve body 202 is provided with a first thinned, half-ring shaped end edge 203a, which partially surrounds the first valve plate 203, and a second thinned, half-ring shaped end edge 204a, which partially surrounds the second valve plate 204.

**FIG. 4** shows a cylindrical valve housing 30 within which the EGR valve 20 is rotatably arranged. The inner surface 32 of the valve housing 30 is provided with a ring shaped rib 33, which delimits a fluid passage 31 and against which abut the first and second end edges 203a, 204a in the position shown, corresponding to a fully closed position the EGR valve 20. In this position, the EGR valve 20 prevents any flow of fluid through the fluid passage 31 in both directions. By rotating the valve shaft 201 aroung a rotating axis X, the angular position of the valve body 202 relative to the plane defined by the rib 33 may vary, thus modifying the opening of the fluid passage 31. By means of the EGR valve 20, it is thus possible to control the flow of fluid through the fluid passage 31. The rotation of the valve shaft 201 can be performed manually or, as in the embodiment shown, through an actuator 34 controlled by the control unit 29. The actuator 34 may be electrically, pneumatically, magnetically or hydraulically operated.

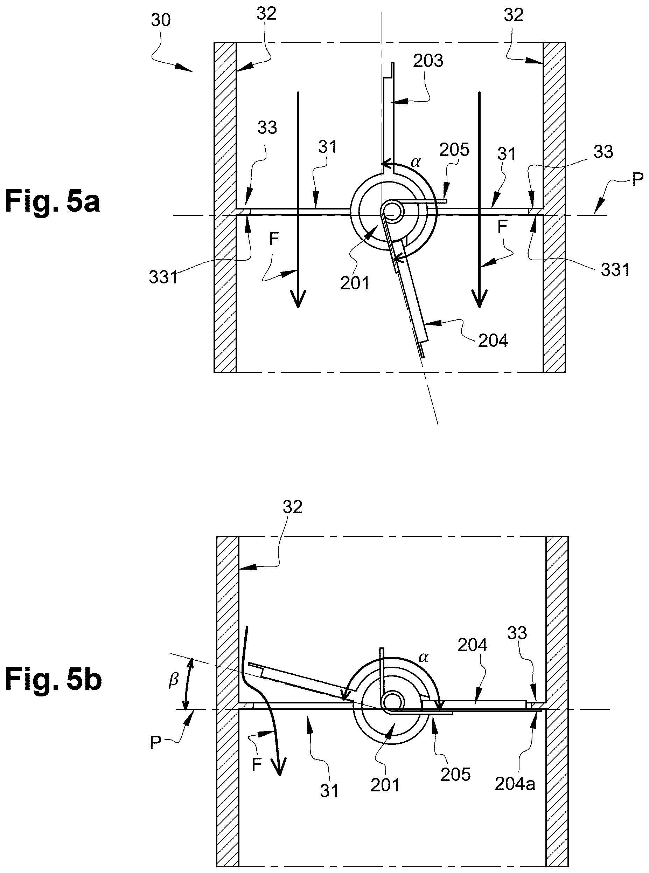

As illustrated in **FIGS 5a-5c****,** urging means, like a spring 205, keep the second flexible valve plate 204 disposed at a non-zero angular distance from the first valve plate 203. This spring 205 may be all types of springs, such as a torsion spring, a compression spring, etc. In a first exemplary embodiment, the spring 205 may have one end connected to the first valve plate 203 and one other end connected to the second valve plate 204. In second exemplary embodiment, the spring 205 may have one end connected to the valve housing 30 and one other end connected to the second valve plate 204. In a third exemplary embodiment, the spring 205 may have one end connected to the valve shaft 201 and one other end connected to the second valve plate 204. The angle α between the plane defined by the second valve plate 204 and the plane defined by the first valve plate 203 may vary depending of the position of the valve body 202 relative to a plane P defined by the rib 33 and depending of the angular distance between the second valve plate 204 and an abutment surface defined by said rib 33. In the embodiment shown in **FIGS 5a-5c****,** the plane P is aligned with a lower face 331 of the rib 33, said lower face 331 forming an abutment surface for the second valve plate 204 as illustrated in **FIG. 5b****.**

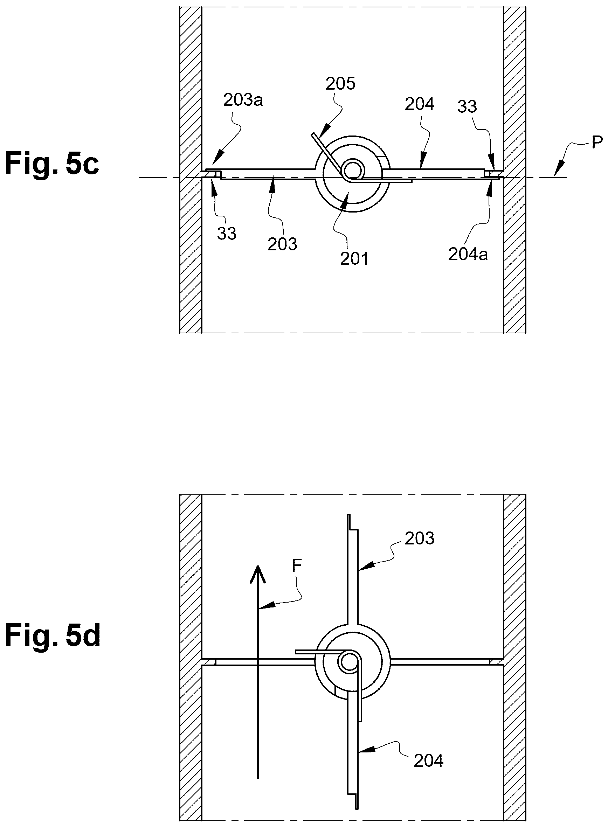

In the position illustrated in **FIG. 5a****,** corresponding to a fully opened position of the valve body 202, the valve body 202 is positioned such that the first valve plate 203 is perpendicular to the plane P and the second valve plate 204 is angularly distant from the first valve plate 203, the angle α being less than or equal to 180°, and preferably greater than 150°. In this fully opened position of the valve body 202, the EGR valve 20 allows a fluid F to flow through the fluid passage 31 without being interrupted. However, this fully opened position of the valve body 202 may vary depending of the direction of the flow of fluid F. Indeed, in **FIG. 5a****,** the fluid F flows from the top of the valve housing 30 to the bottom thereof, such that it first flows along the first valve plate 203 before then flowing along the second valve plate 204. On the contrary, when the fluid F flows from the bottom of the valve housing 30 to the top thereof, as illustrated in **FIG. 5d****,** it first flows along the second valve plate 204 before then flowing along the first valve plate 203. Thus, in this case, the first valve plate 203 and the second valve plate 204 may advantageously be both oriented parallel to the flow direction in the fully opened position of the valve body 202 to avoid being in the way of the flow.

In the position illustrated in **FIG. 5b****,** corresponding to a partially closed position of the valve body 202, the valve body 202 is positioned such that the second thinned, half-ring shaped end edge 204a, as defined above and illustrated in **FIG. 3****,** abuts against the rib 33 and the second valve plate 204 is positioned obliquely relative to the first valve plate 203, the angle α being the same as in the fully opened position of the valve body 202. This partially closed position is reached when the valve shaft 201 rotates about the rotation axis X in the counterclockwise direction from the fully opened position of the valve body 202 till the second end edge 204a contacts the rib 33. In a further embodiment of the invention, in which the first valve plate 203 and the second valve plate 204 are switched relative to the embodiment of FIG. 5a, this partially closed position is reached when the valve shaft 201 rotates about the rotation axis X in the clockwise direction from the fully opened position of the valve body 202 till the second end edge 204a contacts the rib 33. The contact between the second end edge 204a and the rib 33 prevents the fluid F from flowing through the portion of the fluid passage 31 that is closed by the second valve plate 204. Therefore, in this partially closed position of the valve body 202, the EGR valve 20 only allows the fluid F to flow through the fluid passage 31 through a reduced aperture defined between the first valve plate 203 and the inner surface 32 of the valve housing 30.

In the position illustrated in **FIG. 5c****,** corresponding to the fully closed position of the valve body 202, the valve body 202 is positioned such that the first and second end edges 203a, 204a both abut against the rib 33, the first valve plate 203 being parallel to the second valve plate 204, the angle α being equal to 180°. This fully closed position is reached when the valve shaft 201 rotates about the rotation axis X in the counterclockwise direction from the partially closed position of the valve body 202 till the first end edge 203a contacts the rib 33. During this rotation, the spring 205 deforms so that it applies a force opposite to the rotation displacement which causes the second end edge 204a to press against the rib 33, thus ensuring a pressure contact between said second end edge 204a and the rib 33. When pressed against the rib 33 and due to its flexibility, the second valve plate 204 may have the ability to deform slightly to ensure a quasi-sealed contact between said second end edge 204a and said rib 33, thus preventing internal leakage in this fully closed position. Accordingly, the contact between the first end edge 203a and the rib 33 prevents the fluid F from flowing through the portion of the fluid passage 31 that is closed by the first valve plate 203 and the contact between the second end edge 204a and the rib 33 prevents the fluid F from flowing through the portion of the fluid passage 31 that is closed by the second valve plate 204. Therefore, in this fully closed position of the valve body 202, the EGR valve 20 both prevents any flow of fluid through the fluid passage 31 and ensures zero internal leakage without using sealing means.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

**1.** A butterfly EGR valve (20) for the regulation of the flow rate of a fluid flowing in a fluid passage (31) comprising a valve body (202) pivotable about a rotation axis (X), the valve body (202) having a first valve plate (203) and a second flexible valve plate (204) pivotally connected thereto, and urging means (205) keeping the second flexible valve plate (204) disposed at an angular distance from the first valve plate (203), the angle (α) between the plane defined by the second valve plate (204) and the plane defined by the first valve plate (203) being less than or equal to 180°, the valve body (202) being able to move at least in the successive positions:
- a fully opened position, in which the fluid flows through the fluid passage (31) without being interrupted,
- a partially closed position, in which the fluid flows through the fluid passage (31) through a reduced aperture defined by the first valve plate (203) ,
- a fully closed position, in which the fluid cannot flow through the fluid passage (31).

**2.** The butterfly EGR valve (20) of claim 1, wherein the second valve plate (204) is positioned obliquely relative to the first valve plate (203) in the fully opened and partially closed positions of the valve body (202).

**3.** The butterfly EGR valve (20) of any of claims 1-2, further comprising a valve shaft (201) adapted to rotatably move about the rotation axis (X), the first valve plate (203) being fixedly connected to the valve shaft (201) and the second valve plate (204) being pivotally connected to the valve shaft (201).

**4.** The butterfly EGR valve (20) of claim 3, further comprising an actuator (34) adapted to rotatably move the valve shaft (201).

**5.** The butterfly EGR valve (20) of claim 4, further comprising a control unit (29) adapted to control the actuator (34).

**6.** The butterfly EGR valve (20) of any of claims 1-5, wherein the urging means comprise a spring (215) having one end connected to the first valve plate (203) and one other end connected to the second valve plate (204).

**7.** The butterfly EGR valve (20) of any of claims 1-5, wherein the urging means comprise a spring (215) having one end connected to a valve housing (30) within which the butterfly EGR valve (20) is rotatably arranged and one other end connected to the second valve plate (204).

**8.** The butterfly EGR valve (20) of any of claims 3-5, wherein the urging means comprise a spring (215) having one end connected to the valve shaft (201) and one other end connected to the second valve plate (204).

**9.** A valve arrangement for an EGR pipeline comprising a butterfly EGR valve (20) according to any of preceding claims and a valve housing (30) within which the butterfly EGR valve (20) is rotatably arranged.

**10.** The valve arrangement according to claim 9, wherein the valve housing (30) includes a rib (33), which delimits a fluid passage (31) and against which abut the first valve plate (203) in the fully closed position of the valve body (202) and the second valve plate (204) in the partially closed and fully closed positions of the valve body (202).

**12.** The valve arrangement according to claim 11, wherein the angle (β) between the first valve plate (203) and the plane (P) defined by the rib (33) is less than 30° in the partially closed position of the valve body (202).

**13.** An internal combustion engine system (10) comprising an internal combustion engine and an exhaust gas recirculation circuit connecting an exhaust manifold (14) of the engine to an intake manifold (13) of the engine, the exhaust gas recirculation circuit comprising an EGR pipeline (24) equipped with a valve arrangement according to any of claims 9-12.

**14.** A vehicle (1) comprising an internal combustion engine system (10) according to claim 13.
